# EUROPEAN PATENT SPECIFICATION

(11) **EP 4 465 254 B1**
(45) Date of publication and mention of the grant of the patent: **19.08.2026**
(21) Application number: 23195377.9
(22) Date of filing: 05.09.2023
(51) Int. Cl.: G06V 20/58, G06V 20/56, G06V 10/25, G06V 10/26

(54) **THREE-DIMENSIONAL TARGET DETECTION METHOD AND VEHICLE**
VERFAHREN ZUR ERKENNUNG DREIDIMENSIONALER ZIELE UND FAHRZEUG
PROCÉDÉ DE DÉTECTION DE CIBLE TRIDIMENSIONNELLE ET VÉHICULE

(30) Priority: 19.05.2023 CN 202310565718
(43) Date of publication of application: 20.11.2024
(73) Proprietor: Xiaomi EV Technology Co., Ltd., Beijing 100176 (CN)
(72) Inventor: WAN, Shaohua, Beijing, 100176 (CN)
(74) Representative: Stöckeler, Ferdinand

(56) References cited:
- JP-B2- 5 768 927
- US-A1- 2017 270 370
- US-A1- 2020 356 792

## Description

### FIELD

The present invention relates to a field of automatic driving and intelligent perception, and in particular to a three-dimensional target detection method and a vehicle.

### BACKGROUND

Key parts of present three-dimensional target detection methods include inputting a surrounding image of a vehicle into a preset target detection model and acquiring three-dimensional detection framework information of a plurality of target vehicles output by the target detection model. In such methods, the surrounding image of the vehicle is collected by an image sensor on the vehicle, the noise in the surrounding image jitters, and the target detection model is sensitive to the jitter of the noise, which leads to a low accuracy and poor stability of the three-dimensional detection framework information detected by the target detection model.

JP 5 768 927 B2 relates to a solid-object detection device, including: a camera that is mounted on a vehicle and images the area behind said vehicle; solid-object detection units that detect a solid object in a right-side detection region or left-side detection region behind the vehicle on the basis of image information from the camera; a solid-object determination unit that determines whether or not the solid object detected by the solid-object detection units is another vehicle located in the right-side detection region or left-side detection region; a similarity-degree computation unit that computes a degree of similarity between image information from the right-side detection region behind the vehicle and image information from the left-side detection region behind the vehicle; and a control unit that outputs control commands to the various means so as to prevent the detected solid object from being identified as another vehicle if the degree of similarity computed by the similarity-degree computation unit is greater than or equal to a prescribed level.

### SUMMARY

The present invention provides a three-dimensional target detection method according to claim 1, a vehicle according to claim 8 and a non-transitory computer-readable storage medium according to claim 9. The preferred features according to the present invention are defined in the dependent claims. Any embodiment in the present invention that does not fall within the scope of the present invention should be regarded as an example for understanding the present invention.

According to a first aspect of embodiments of the present invention, a three-dimensional target detection method is provided, and the method includes: acquiring a surrounding image of a vehicle; inputting the surrounding image of the vehicle into a preset target detection model, and acquiring three-dimensional detection framework information of a target vehicle output by the target detection model; obtaining auxiliary detection information of the target vehicle by performing at least one of a grounding line detection, an in-garage location detection and an occlusion rate detection on the surrounding image of the vehicle; and obtaining corrected three-dimensional detection framework information of the target vehicle by correcting the three-dimensional detection framework information of the target vehicle according to the auxiliary detection information of the target vehicle.

Optionally, the auxiliary detection information of the target vehicle includes grounding line information of the target vehicle, and obtaining the corrected three-dimensional detection framework information of the target vehicle by correcting the three-dimensional detection framework information of the target vehicle according to the auxiliary detection information of the target vehicle includes: acquiring detection framework location information in the three-dimensional detection framework information of the target vehicle; and obtaining the corrected three-dimensional detection framework information of the target vehicle by correcting the detection framework location information in the three-dimensional detection framework information of the target vehicle according to the grounding line information of the target vehicle.

Optionally, obtaining the corrected three-dimensional detection framework information of the target vehicle by correcting the detection framework location information in the three-dimensional detection framework information of the target vehicle according to the grounding line information of the target vehicle includes: determining a detection framework region of the target vehicle according to the detection framework location information of the target vehicle; in response to determining that there is a first grounding point in the grounding line information, in which the first grounding point is not located in the detection framework region, determining location offset information of the detection framework region according to location information of the first grounding point; and obtaining the corrected detection framework location information of the target vehicle by correcting the detection framework location information in the three-dimensional detection framework information of the target vehicle according to the location offset information.

Optionally, the auxiliary detection information of the target vehicle includes in-garage location information of the target vehicle, and obtaining the corrected three-dimensional detection framework information of the target vehicle by correcting the three-dimensional detection framework information of the target vehicle according to the auxiliary detection information of the target vehicle includes: acquiring detection framework direction information and detection framework location information in the three-dimensional detection framework information of the target vehicle; and obtaining the corrected three-dimensional detection framework information of the target vehicle by correcting the detection framework direction information and the detection framework location information in the three-dimensional detection framework information of the target vehicle according to the in-garage location information of the target vehicle.

Optionally, obtaining the corrected three-dimensional detection framework information of the target vehicle by correcting the detection framework direction information and the detection framework location information in the three-dimensional detection framework information of the target vehicle according to the in-garage location information of the target vehicle includes: determining in-garage location direction information according to the in-garage location information of the target vehicle; determining direction offset information between the in-garage location direction information and the detection framework direction information in response to determining that the in-garage location direction information is inconsistent with the detection framework direction information; and obtaining the corrected three-dimensional detection framework information of the target vehicle by correcting the detection framework direction information and the detection framework location information in the three-dimensional detection framework information of the target vehicle according to the direction offset information.

Optionally, the auxiliary detection information of the target vehicle includes an occlusion rate of the target vehicle, and obtaining the corrected three-dimensional detection framework information of the target vehicle by correcting the three-dimensional detection framework information of the target vehicle according to the auxiliary detection information of the target vehicle includes: acquiring confidence information in the three-dimensional detection framework information of the target vehicle; and obtaining the corrected three-dimensional detection framework information of the target vehicle by lowering the confidence information in the three-dimensional detection framework information of the target vehicle in response to determining that the occlusion rate of the target vehicle is less than a preset occlusion rate threshold.

Optionally, a scene corresponding to the surrounding image of the vehicle is a parking lot scene; in response to determining that the target vehicle is in a moving state, the auxiliary detection information of the target vehicle includes at least one of grounding line information and an occlusion rate; and in response to determining that the target vehicle is in a stationary state, the auxiliary detection information of the target vehicle includes at least one of in-garage location information and an occlusion rate.

According to a second aspect of embodiments of the present invention, a vehicle is further provided, and includes a processor and a memory storing instructions that, when executed by the processor, cause the processor to execute the three-dimensional target detection method of the first aspect.

According to a third aspect of embodiments of the present invention, a non-transitory computer-readable storage medium is provided. The storage medium stores machine-readable instructions that, when executed by a processor, cause the processor to execute the three-dimensional target detection method of the first aspect.

The technical solution provided by the embodiments of the present invention has at least the following beneficial effects.

The surrounding image of the vehicle to be processed is acquired, the surrounding image of the vehicle is input into the preset target detection model, the three-dimensional detection framework information of at least one target vehicle output by the target detection model is acquired, at least one of the grounding line detection, the in-garage location detection and the occlusion rate detection is performed on the surrounding image of the vehicle to obtain the auxiliary detection information of the at least one target vehicle, and for each target vehicle, the three-dimensional detection framework information of the target vehicle is corrected according to the auxiliary detection information of the target vehicle, to obtain the corrected three-dimensional detection framework information of the target vehicle, so that the three-dimensional detection framework information of the target vehicle can be corrected in combination with the auxiliary detection information of the target vehicle, so as to avoid the influence of the noise jitter on the accuracy of the three-dimensional detection framework information, thus improving the accuracy of the three-dimensional detection framework information and improving the stability of the three-dimensional target detection.

It is to be understood that both the foregoing general description and the following detailed description are illustrative and explanatory only and are not restrictive of the present invention.

### BRIEF DESCRIPTION OF THE DRAWINGS

The accompanying drawings, which are incorporated in and constitute a part of this specification, illustrate embodiments consistent with the present invention and together with the description, serve to explain the principles of the present invention, and do not unduly limit the present invention.
Fig. 1 is a flowchart of a three-dimensional target detection method according to an embodiment of the present invention.
Fig. 2 is a schematic diagram of grounding line information of a surrounding image of a vehicle.
Fig. 3 is a flowchart of a three-dimensional target detection method according to another embodiment of the present invention.
Fig. 4 is a schematic diagram of a three-dimensional target detection device according to an embodiment of the present invention.
Fig. 5 is a block diagram of a vehicle according to an illustrative embodiment of the present invention.

### DETAILED DESCRIPTION

In order to make those ordinary skilled in the art better understand the technical solution of the present invention, the technical solution in the embodiments of the present invention will be described clearly and completely with reference to the attached drawings.

It should be noted that the terms including "first" and "second" in the description and claims of the present invention and the above drawings are used to distinguish similar objects, and are not necessarily used to describe a specific order or sequence. It should be understood that the data so used may be interchanged under appropriate circumstances, so that the embodiments of the present invention described herein may be implemented in other orders than those illustrated or described herein. The embodiments described in the following illustrative embodiments do not represent all possible embodiments consistent with the present invention. Rather, they are merely examples of devices and methods consistent with some aspects of the present invention as detailed in the appended claims.

At present, a three-dimensional target detection method is mainly to input a surrounding image of a vehicle into a preset target detection model and acquire three-dimensional detection framework information of a plurality of target vehicles output by the target detection model. In the above solution, the surrounding image of the vehicle is collected by an image sensor on the vehicle, the noise in the surrounding image jitters, and the target detection model is sensitive to the jitter of the noise, which leads to the low accuracy and poor stability of the three-dimensional detection framework information detected by the target detection model.

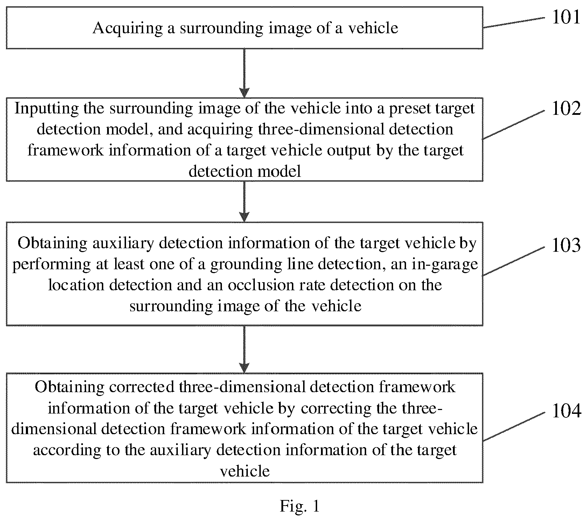

Fig. 1 is a flowchart of a three-dimensional target detection method according to an embodiment of the present invention. It should be noted that the three-dimensional target detection method of this embodiment may be applied to a three-dimensional target detection device, which may be configured in an electronic equipment of a vehicle or an electronic equipment communicating with the vehicle, so that the electronic equipment can perform a three-dimensional target detection function.

The electronic equipment may be any apparatus with computing power, such as an image acquisition apparatus, a Personal Computer (PC), a mobile terminal, a server, etc. The mobile terminal may be, for example, an on-board apparatus, a mobile phone, a tablet computer, a personal digital assistant, a wearable apparatus and other hardware apparatuses with various operating systems, touch screens and/or display screens. In the following embodiments, an example in which the electronic equipment serves as an execution subject is taken for explanations.

As shown in Fig. 1, the method includes the following steps.

At step 101, a surrounding image of a vehicle is acquired.

In the embodiment of the present invention, the surrounding image of the vehicle may be a two-dimensional image acquired by an image sensor on the vehicle. The number of the surrounding images of the vehicle may be one or more. For example, if the acquisition region is a small-angle range in front of the vehicle, one image sensor may be used to carry out the image acquisition processing on the front of the vehicle at the current location of the vehicle to obtain one surrounding image of the vehicle. For another example, if the acquisition region is a large-angle range around the vehicle, such as a full-angle range, a plurality of image sensors facing different directions may be used at the current location of the vehicle to carry out the image acquisition processing to obtain a plurality of surrounding images of the vehicle.

At step 102, the surrounding image of the vehicle is input into a preset target detection model, and three-dimensional detection framework information of at least one target vehicle output by the target detection model is acquired.

In the embodiment of the present invention, the preset target detection model may be obtained by being trained according to a large number of sample images and the three-dimensional detection framework information of the targets in the sample images.

The three-dimensional detection framework information of the target vehicle includes at least one of detection framework location information, detection framework direction information, detection framework category information and confidence information. When the three-dimensional detection framework information is the three-dimensional detection framework information of the vehicle, the detection framework category information is a category of the vehicle.

The detection framework location information may include length information, width information, height information and three-dimensional coordinate information of a center point of a detection framework. It should be noted that the three-dimensional coordinate information or location information mentioned in the present invention refers to the coordinate information or location information in the same three-dimensional coordinate system, and will not be described again below. The three-dimensional coordinate system, such as the world coordinate system and the vehicle body coordinate system, may be set according to actual needs.

In an example, the number of the confidence information may be one, and the confidence information may be the confidence of three-dimensional detection framework information. In another example, the number of the confidence information may be two, one confidence information is the confidence of the detection framework location information and the other confidence information is the confidence of the detection framework category information.

At step 103, at least one of a grounding line detection, an in-garage location detection and an occlusion rate detection is performed on the surrounding image of the vehicle to obtain auxiliary detection information of the at least one target vehicle.

It may be understood that an in-garage location herein refers to a location in a garage, and the vehicle is configured to be parked in such location.

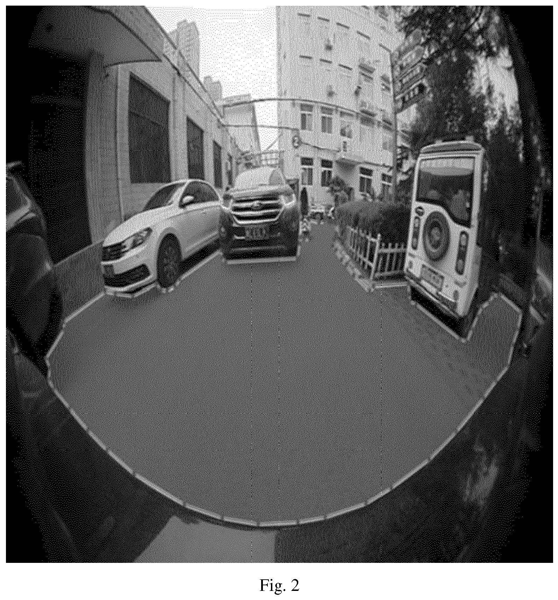

In an embodiment of the present invention, the grounding line detection algorithm may be, for example, a free space detection algorithm. Combined with the free space detection algorithm, a plurality of grounding line segments in the surrounding image of the vehicle and a target category corresponding to each grounding line segment can be obtained, that is, the grounding line segment of each target in the surrounding image of the vehicle can be obtained. The targets are, for example, vehicles, columns, traffic cones, curbs, walls, etc. Taking an example in which the target is a vehicle, the grounding line information of the vehicle may include the coordinate information of each point in the grounding line segment of the vehicle. This coordinate information is coordinate information in the three-dimensional coordinate system. A schematic diagram of the grounding line information of the surrounding image of the vehicle can be seen in Fig. 2, in which the grounding line formed by the grounding line segments of a plurality of targets is shown, but the target category corresponding to each grounding line segment is not shown.

Corner point information of the in-garage location of each vehicle in the surrounding image of the vehicle is obtained by performing the in-garage location detection on the surrounding image of the vehicle. The corner point information of the in-garage location refers to coordinate information of each corner of the in-garage location where the vehicle is. The coordinate information is coordinate information in the three-dimensional coordinate system.

One detection algorithm for the occlusion rate detection is determining the grounding line segment of each target in the surrounding image of the vehicle in combination with the free space detection algorithm, and for each target, determining an occlusion rate of the target in combination with a length of the grounding line segment of the target and a total length of a ground projection boundary of the target. For example, for one vehicle, a ratio of the length of the grounding line segment of the vehicle to the total length of the ground projection boundary of the vehicle is taken as the occlusion rate of the vehicle.

In an embodiment of the present invention, different detections may be performed on the surrounding image of the vehicle in different scenes to obtain the auxiliary detection information of the target vehicle. When the scene corresponding to the surrounding image of the vehicle is a parking lot scene, at least one of the grounding line detection, the in-garage location detection and the occlusion rate detection may be performed on the surrounding image of the vehicle. When the scene corresponding to the surrounding image of the vehicle is a road driving scene, at least one of the grounding line detection and the occlusion rate detection may be performed on the surrounding image of the vehicle.

The scene corresponding to the surrounding image of the vehicle is the scene where the vehicle acquiring the surrounding image of the vehicle is located.

For specific scenes, different target vehicles have different auxiliary detection information in detection results obtained after detecting the surrounding image of the vehicle. Taking the parking lot scene as an example, for vehicles in a moving state, such as vehicles outside the garage and vehicles in a parking-in or parking-out state, the grounding line information and the occlusion rate information of the vehicles can be detected. For vehicles in a stationary state, for example, vehicles located in the garage, it is possible to detect the in-garage location information and the occlusion rate information of the vehicles. That is to say, for different target vehicles in the same surrounding image of the vehicle, different auxiliary detection information may be detected and obtained.

At step 104, for each target vehicle, the three-dimensional detection framework information of the target vehicle is corrected according to the auxiliary detection information of the target vehicle, to obtain corrected three-dimensional detection framework information of the target vehicle.

In the embodiment of the present invention, for the target vehicle, if the auxiliary detection information of the target vehicle includes a variety of information, the three-dimensional detection framework information of the target vehicle may be corrected for each information in turn and in combination with this information, and the corrected three-dimensional detection framework information of the target vehicle can be obtained after the correction is completed in combination with the variety of information.

In the three-dimensional target detection method of the embodiment of the present invention, the surrounding image of the vehicle is acquired, the surrounding image of the vehicle is input into the preset target detection model, the three-dimensional detection framework information of at least one target vehicle output by the target detection model is acquired, at least one of the grounding line detection, the in-garage location detection and the occlusion rate detection is performed on the surrounding image of the vehicle to obtain the auxiliary detection information of the at least one target vehicle, and for each target vehicle, the three-dimensional detection framework information of the target vehicle is corrected according to the auxiliary detection information of the target vehicle, to obtain the corrected three-dimensional detection framework information of the target vehicle, so that the three-dimensional detection framework information of the target vehicle can be corrected in combination with the auxiliary detection information of the target vehicle, so as to avoid the influence of the noise jitter on the accuracy of the three-dimensional detection framework information, thus improving the accuracy of the three-dimensional detection framework information and improving the stability of the three-dimensional target detection.

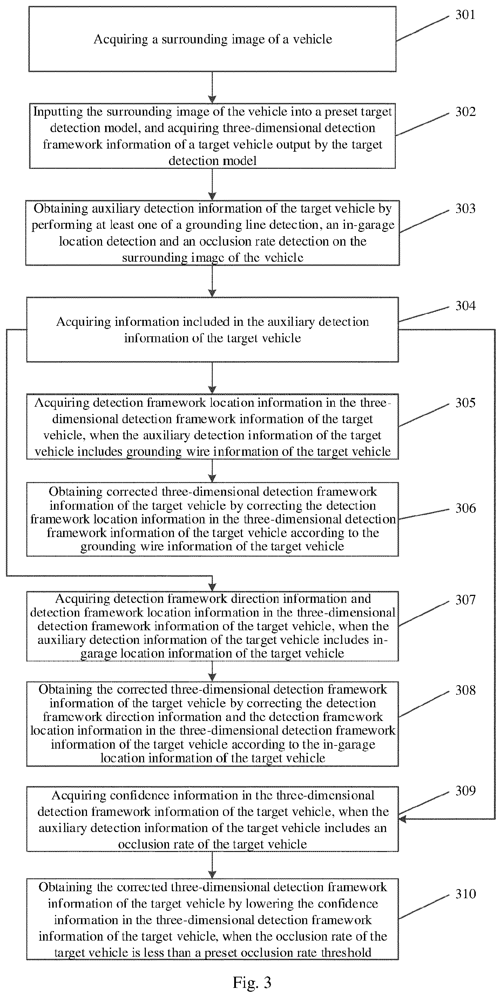

Fig. 3 is a flowchart of a three-dimensional target detection method according to another embodiment of the present invention. It should be noted that the three-dimensional target detection method of this embodiment may be applied to a three-dimensional target detection device, which may be configured in electronic equipment of a vehicle or electronic equipment in communication with the vehicle, so that the electronic equipment can perform a three-dimensional target detection function.

The electronic equipment may be any apparatus with computing power, such as an image acquisition apparatus, a Personal Computer (PC), a mobile terminal, a server, etc. The mobile terminal may be, for example, an on-board apparatus, a mobile phone, a tablet computer, a personal digital assistant, a wearable apparatus and other hardware apparatuses with various operating systems, touch screens and/or display screens. In the following embodiments, an example in which the electronic apparatus serves as an execution subject is taken for explanations.

As shown in Fig. 3, the method includes the following steps.

At step 301, a surrounding image of a vehicle is obtained.

At step 302, the surrounding image of the vehicle is input into a preset target detection model, and three-dimensional detection framework information of at least one target vehicle output by the target detection model is acquired.

At step 303, at least one of a grounding line detection, an in-garage location detection and an occlusion rate detection is performed on the surrounding image of the vehicle to obtain auxiliary detection information of the at least one target vehicle.

At step 304, information included in the auxiliary detection information of the target vehicle is acquired for each target vehicle.

At step 305, detection framework location information in the three-dimensional detection framework information of the target vehicle is acquired, if the auxiliary detection information of the target vehicle includes grounding line information of the target vehicle.

At step 306, the detection framework location information in the three-dimensional detection framework information of the target vehicle is corrected according to the grounding line information of the target vehicle to obtain corrected three-dimensional detection framework information of the target vehicle.

In the embodiment of the present invention, the process of the electronic equipment executing step 306 may be, for example, as follows: a detection framework region of the target vehicle is determined according to the detection framework location information of the target vehicle; when there is a first grounding point (which is not located in the detection framework region) in the grounding line information, location offset information of the detection framework region is determined according to location information of the first grounding point; the detection framework location information in the three-dimensional detection framework information of the target vehicle is corrected according to the location offset information, to obtain the corrected detection framework location information of the target vehicle.

The detection framework location information may include length information, width information, height information of a detection framework and three-dimensional coordinate information of a center point of the detection framework. The detection framework region determined and obtained according to the detection framework location information may be a three-dimensional region in a three-dimensional coordinate system.

The process of the electronic equipment determining the location offset information of the detection framework region according to the location information of the first grounding point may be, for example, as follows: offset information between a point closest to the first grounding point in the detection framework region and the first grounding point is determined according to the location information of the first grounding point; this offset information is determined as the location offset information of the detection framework region. When a plurality of the first grounding points are provided, the maximum offset information may be selected from a plurality of the determined offset information as the location offset information of the detection framework region.

At step 307, detection framework direction information and the detection framework location information in the three-dimensional detection framework information of the target vehicle are acquired, when the auxiliary detection information of the target vehicle includes in-garage location information of the target vehicle.

At step 308, the detection framework direction information and the detection framework location information in the three-dimensional detection framework information of the target vehicle are corrected according to the in-garage location information of the target vehicle, to obtain the corrected three-dimensional detection framework information of the target vehicle.

In the embodiment of the present invention, the process of the electronic equipment executing step 308 may be, for example, as follows: in-garage location direction information is determined according to the in-garage location information of the target vehicle; when the in-garage location direction information is inconsistent with the detection framework direction information, direction offset information between the in-garage location direction information and the detection framework direction information; the detection framework direction information and the detection framework location information in the three-dimensional detection framework information of the target vehicle are corrected according to the direction offset information, to obtain the corrected three-dimensional detection framework information of the target vehicle.

For example, according to the direction offset information, the electronic equipment may correct the detection framework direction information and the detection framework location information in the three-dimensional detection framework information of the target vehicle as follows: the detection framework direction information in the three-dimensional detection framework information of the target vehicle is corrected according to the direction offset information; and the corrected detection framework location information is determined according to the corrected detection framework direction information and the detection framework location information before correction.

At step 309, confidence information in the three-dimensional detection framework information of the target vehicle is acquired, when the auxiliary detection information of the target vehicle includes an occlusion rate of the target vehicle.

At step 310, the confidence information in the three-dimensional detection framework information of the target vehicle is lowered to obtain the corrected three-dimensional detection framework information of the target vehicle, when the occlusion rate of the target vehicle is less than a preset occlusion rate threshold.

The auxiliary detection information of the target vehicle includes a variety of detection information. In an example, the auxiliary detection information of the target vehicle may include the grounding line information and the in-garage location information. In another example, the auxiliary detection information of the target vehicle may include the grounding line information and the occlusion rate. In another example, the auxiliary detection information of the target vehicle may include the in-garage location information and the occlusion rate. In another example, the auxiliary detection information of the target vehicle may include the grounding line information, the in-garage location information and the occlusion rate.

When the auxiliary detection information of the target vehicle includes a variety of detection information, the three-dimensional detection framework information of the target vehicle may be corrected in combination with each detection information in turn. For example, when the auxiliary detection information of the target vehicle includes the grounding line information and the occlusion rate, the three-dimensional detection framework information of the target vehicle may be first corrected in combination with the grounding line information, and then the preliminarily corrected three-dimensional detection framework information of the target vehicle is corrected again in combination with the occlusion rate.

For another example, when the auxiliary detection information of the target vehicle includes the in-garage location information and the occlusion rate, the three-dimensional detection framework information of the target vehicle may be first corrected in combination with the in-garage location information, and then the corrected three-dimensional detection framework information of the target vehicle is corrected again in combination with the occlusion rate.

It should be noted that the details of steps 301 to 303 may refer to steps 101 to 103 in the embodiment shown in Fig. 1, and will not be described in detail here.

In the three-dimensional target detection method of the embodiment of the present invention, the surrounding image of the vehicle is acquired; the surrounding image of the vehicle is input into the preset target detection model, and the three-dimensional detection framework information of at least one target vehicle output by the target detection model is acquired; at least one of the grounding line detection, the in-garage location detection and the occlusion rate detection is performed on the surrounding image of the vehicle to obtain the auxiliary detection information of the at least one target vehicle; for each target vehicle, the information included in the auxiliary detection information of the target vehicle is acquired; when the auxiliary detection information of the target vehicle includes the grounding line information of the target vehicle, the detection framework location information in the three-dimensional detection framework information of the target vehicle is obtained; according to the grounding line information of the target vehicle, the detection framework location information in the three-dimensional detection framework information of the target vehicle is corrected to obtain the corrected three-dimensional detection framework information of the target vehicle; when the auxiliary detection information of the target vehicle includes the in-garage location information of the target vehicle, the detection framework direction information and the detection framework location information in the three-dimensional detection framework information of the target vehicle are acquired; according to the in-garage location information of the target vehicle, the detection framework direction information and the detection framework location information in the three-dimensional detection framework information of the target vehicle are corrected to obtain the corrected three-dimensional detection framework information of the target vehicle; when the auxiliary detection information of the target vehicle includes the occlusion rate of the target vehicle, the confidence information in the three-dimensional detection framework information of the target vehicle is acquired; when the occlusion rate of the target vehicle is less than the preset occlusion rate threshold, the confidence information in the three-dimensional detection framework information of the target vehicle is lowered to obtain the corrected three-dimensional detection framework information of the target vehicle, so that the three-dimensional detection framework information of the target vehicle can be corrected in combination with the auxiliary detection information of the target vehicle, so as to avoid the influence of the noise jitter on the accuracy of the three-dimensional detection framework information, thus improving the accuracy of the three-dimensional detection framework information, and improving the stability of the three-dimensional target detection.

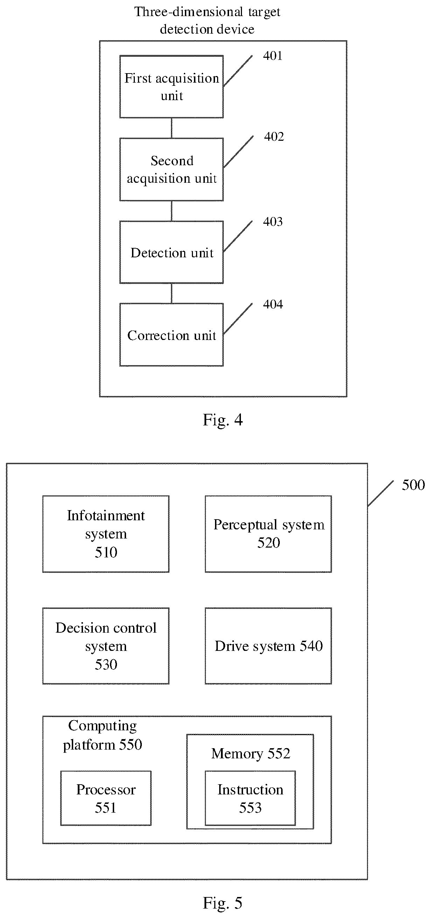

Fig. 4 is a schematic diagram of a three-dimensional target detection device according to an embodiment of the present invention.

As shown in Fig. 4, the three-dimensional target detection device may include a first acquisition unit 401, a second acquisition unit 402, a detection unit 403 and a correction unit 404.

The first acquisition unit 401 is configured to acquire a surrounding image of a vehicle.

The second acquisition unit 402 is configured to input the surrounding image of the vehicle into a preset target detection model and acquire three-dimensional detection framework information of at least one target vehicle output by the target detection model.

The detection unit 403 is configured to perform at least one of a grounding line detection, an in-garage location detection and an occlusion rate detection on the surrounding image of the vehicle to obtain auxiliary detection information of the at least one target vehicle.

The correction unit 404 is configured to correct the three-dimensional detection framework information of the target vehicle according to the auxiliary detection information of the target vehicle to obtain corrected three-dimensional detection framework information of the target vehicle, for each target vehicle.

In an embodiment of the present invention, the auxiliary detection information of the target vehicle includes grounding line information of the target vehicle. The correction unit 404 is specifically configured to obtain detection framework location information in the three-dimensional detection framework information of the target vehicle, correct the detection framework location information in the three-dimensional detection framework information of the target vehicle according to the grounding line information of the target vehicle, so as to obtain the corrected three-dimensional detection framework information of the target vehicle.

In an embodiment of the present invention, the correction unit 404 is further specifically configured to determine a detection framework region of the target vehicle according to the detection framework location information of the target vehicle, determine location offset information of the detection framework region according to location information of the first grounding point when there is a first grounding point (which is not located in the detection framework region) in the grounding line information, and correct the detection framework location information in the three-dimensional detection framework information of the target vehicle according to the location offset information, so as to obtain the corrected detection framework location information of the target vehicle.

In an embodiment of the present invention, the auxiliary detection information of the target vehicle includes in-garage location information of the target vehicle. The correction unit 404 is specifically configured to obtain detection framework direction information and detection framework location information in the three-dimensional detection framework information of the target vehicle, correct the detection framework direction information and the detection framework location information in the three-dimensional detection framework information of the target vehicle according to the in-garage location information of the target vehicle, so as to obtain the corrected three-dimensional detection framework information of the target vehicle.

In an embodiment of the present invention, the correction unit 404 is further specifically configured to determine in-garage location direction information according to the in-garage location information of the target vehicle, determine direction offset information between the in-garage location direction information and the detection framework direction information when the in-garage location direction information is inconsistent with the detection framework direction information, and correct the detection framework direction information and the detection framework location information in the three-dimensional detection framework information of the target vehicle according to the direction offset information, so as to obtain the corrected three-dimensional detection framework information of the target vehicle.

In an embodiment of the present invention, the auxiliary detection information of the target vehicle includes an occlusion rate of the target vehicle. The correction unit 404 is specifically configured to obtain confidence information in the three-dimensional detection framework information of the target vehicle, lower the confidence information in the three-dimensional detection framework information of the target vehicle when the occlusion rate of the target vehicle is less than a preset occlusion rate threshold, so as to obtain the corrected three-dimensional detection framework information of the target vehicle.

In an embodiment of the present invention, the scene corresponding to the surrounding image of the vehicle is a parking lot scene. When the target vehicle is in a moving state, the auxiliary detection information of the target vehicle includes at least one of the grounding line information and the occlusion rate. When the target vehicle is in a stationary state, the auxiliary detection information of the target vehicle includes at least one of the in-garage location information and the occlusion rate.

In the three-dimensional target detection device of the embodiment of the present invention, the surrounding image of the vehicle is acquired, the surrounding image of the vehicle is input into the preset target detection model, the three-dimensional detection framework information of at least one target vehicle output by the target detection model is acquired, at least one of the grounding line detection, the in-garage location detection and the occlusion rate detection is performed on the surrounding image of the vehicle to obtain the auxiliary detection information of the at least one target vehicle, and for each target vehicle, the three-dimensional detection framework information of the target vehicle is corrected according to the auxiliary detection information of the target vehicle, to obtain the corrected three-dimensional detection framework information of the target vehicle, so that the three-dimensional detection framework information of the target vehicle can be corrected in combination with the auxiliary detection information of the target vehicle, so as to avoid the influence of the noise jitter on the accuracy of the three-dimensional detection framework information, thus improving the accuracy of the three-dimensional detection framework information and improving the stability of the three-dimensional target detection.

According to embodiments of the present invention, there is also provided a vehicle including a processor, and a memory for storing instructions executable by the processor. The processor is configured to implement the three-dimensional target detection method as described above.

In order to realize the above embodiments, the present invention also provides a storage medium.

When instructions in the storage medium are executed by a processor, the processor is enabled to perform the three-dimensional target detection method as described above.

In order to realize the above embodiments, the present invention also provides a computer program product.

When the computer program product is executed by a processor of the electronic equipment, the electronic equipment is enabled to perform the above method.

Fig. 5 is a block diagram of a vehicle 500 according to an illustrative embodiment of the present invention. For example, the vehicle 500 may be a hybrid vehicle, a non-hybrid vehicle, an electric vehicle, a fuel cell vehicle or other types of vehicles. The vehicle 500 may be an autonomous vehicle, a semi-autonomous vehicle or a non-autonomous vehicle.

Referring to Fig. 5, the vehicle 500 may include various subsystems, such as an infotainment system 510, a perception system 520, a decision control system 530, a drive system 540, and a computing platform 550. The vehicle 500 may also include more or less subsystems, and each subsystem may include a plurality of components. In addition, the subsystems and the components of the vehicle 500 may be interconnected in a wired or wireless manner.

In some embodiments, the infotainment system 510 may include a communication system, an entertainment system, a navigation system and the like.

The perception system 520 may include several sensors for sensing information of the environment around the vehicle 500. For example, the perception system 520 may include a global positioning system (the global positioning system may be a GPS system, BeiDou Navigation Satellite System or other positioning systems), an inertial measurement unit (IMU), a lidar, a millimeter-wave radar, an ultrasonic radar and a camera.

The decision control system 530 may include a computing system, a vehicle controller, a steering system, an accelerator and a braking system.

The drive system 540 may include components that provide power movements for the vehicle 500. In an embodiment, the drive system 540 may include an engine, an energy source, a transmission system and wheels. The engine may be one or a combination of an internal combustion engine, an electric motor and an air compression engine. The engine can convert the energy provided by the energy source into the mechanical energy.

Some or all functions of the vehicle 500 are controlled by the computing platform 550. The computing platform 550 may include a processor 551 and a memory 552, and the processor 551 may execute instructions 553 stored in the memory 552. The processor 551 may include a single processor or multiple processors.

The processor 551 may be any conventional processor, such as a commercially available CPU. The processor may also include, for example, a Graphic Process Unit (GPU), a Field Programmable Gate Array (FPGA), a System on Chip (SOC), an Application Specific Integrated Circuit (ASIC) or a combination thereof.

The memory 552 may be realized by any type of volatile or nonvolatile memory device or their combination, such as static random access memory (SRAM), electrically erasable programmable read-only memory (EEPROM), erasable programmable read-only memory (EPROM), programmable read-only memory (PROM), read-only memory (ROM), magnetic memory, flash memory, magnetic disk or optical disk.

In addition to the instructions 553, the memory 552 may also store data, such as a road map, route information, a vehicle location, a direction, a speed and so on. The data stored in the memory 552 may be used by the computing platform 550.

In the embodiment of the present invention, the processor 551 may execute the instructions 553 to complete all or part of the steps of the three-dimensional target detection method described above.

Furthermore, the word "illustrative" is used herein to mean serving as an example, an instance, and a diagram. Any aspect or design described herein as "illustrative" is not necessarily to be understood as advantageous over other aspects or designs. On the contrary, the use of the word "illustrative" is intended to present concepts in a concrete way. As used herein, the term "or" is intended to mean an inclusive "or" rather than an exclusive "or". That is, unless otherwise specified or clear from the context, "X is applied to A or B" is intended to mean any one of the natural inclusive arrangements. That is, if X is applied A, X is applied to B, or X is applied to both A and B, then "X is applied to A or B" is satisfied in any of the foregoing examples. In addition, the articles "a" and "an" as used in this application and the appended claims are generally understood to mean "one or more" unless otherwise specified or clearly pointed out from the context.

Likewise, although the present invention has been shown and described with respect to one or more implementations, equivalent variations and modifications will occur to those skilled in the art after reading and understanding the specification and drawings. The present invention includes all such modifications and variations, and is limited only by the scope of the claims. With particular reference to various functions performed by the above components (e.g., elements, resources, etc.), unless otherwise indicated, the terms used to describe such components are intended to correspond to any component (functionally equivalent) that performs the specific functions of the described components, even if it is not structurally equivalent to the disclosed structure. In addition, although a particular feature of the present invention may have been disclosed with respect to only one of several implementations, such feature may be combined with one or more other features of other implementations, as desirable and advantageous for any given or specific application. Furthermore, in terms of "including", "possessing", "provided", "having", or variations thereof used in the detailed description or claims, such terms are intended to be inclusive in a manner similar to the term "comprising".

## Claims

1. A three-dimensional target detection method, comprising:
acquiring (101, 301) a surrounding image of a vehicle;
inputting (102, 302) the surrounding image of the vehicle into a preset target detection model, and acquiring (102, 302) three-dimensional detection framework information of a target vehicle in the surrounding image of the vehicle output by the target detection model, wherein the three-dimensional detection framework information of the target vehicle comprises at least one of detection framework location information, detection framework direction information, detection framework category information and confidence information;
obtaining (103, 303) auxiliary detection information of the target vehicle by performing at least one of a grounding line detection, an in-garage location detection and an occlusion rate detection on the surrounding image of the vehicle, wherein the auxiliary detection information of the target vehicle comprises at least one of grounding line information of the target vehicle, in-garage location information of the target vehicle and an occlusion rate of the target vehicle; and
obtaining (104) corrected three-dimensional detection framework information of the target vehicle by correcting the three-dimensional detection framework information of the target vehicle according to the auxiliary detection information of the target vehicle,
wherein in the in-garage location detection, corner point information of an in-garage location of each target vehicle in the surrounding image of the vehicle is obtained, and the corner point information of the in-garage location refers to coordinate information of each corner of the in-garage location where the target vehicle is, and
wherein in the occlusion rate detection, a grounding line segment of each target vehicle in the surrounding image of the vehicle is determined in combination with a free space detection algorithm, and for each target vehicle, an occlusion rate of the target vehicle is determined in combination with a length of the grounding line segment of the target vehicle and a total length of a ground projection boundary of the target vehicle.

2. The method according to claim 1, wherein obtaining (104) the corrected three-dimensional detection framework information of the target vehicle by correcting the three-dimensional detection framework information of the target vehicle according to the auxiliary detection information of the target vehicle comprises:
acquiring (305) the detection framework location information in the three-dimensional detection framework information of the target vehicle; and
obtaining (306) the corrected three-dimensional detection framework information of the target vehicle by correcting the detection framework location information in the three-dimensional detection framework information of the target vehicle according to the grounding line information of the target vehicle.

3. The method according to claim 2, wherein obtaining (306) the corrected three-dimensional detection framework information of the target vehicle by correcting the detection framework location information in the three-dimensional detection framework information of the target vehicle according to the grounding line information of the target vehicle comprises:
determining a detection framework region of the target vehicle according to the detection framework location information of the target vehicle;
in response to determining that there is a first grounding point in the grounding line information, wherein the first grounding point is not located in the detection framework region, determining location offset information of the detection framework region according to location information of the first grounding point; and
obtaining the corrected detection framework location information of the target vehicle by correcting the detection framework location information in the three-dimensional detection framework information of the target vehicle according to the location offset information.

4. The method according to claim 1, wherein obtaining (104) the corrected three-dimensional detection framework information of the target vehicle by correcting the three-dimensional detection framework information of the target vehicle according to the auxiliary detection information of the target vehicle comprises:
acquiring (307) the detection framework direction information and the detection framework location information in the three-dimensional detection framework information of the target vehicle; and
obtaining (308) the corrected three-dimensional detection framework information of the target vehicle by correcting the detection framework direction information and the detection framework location information in the three-dimensional detection framework information of the target vehicle according to the in-garage location information of the target vehicle.

5. The method according to claim 4, wherein obtaining (308) the corrected three-dimensional detection framework information of the target vehicle by correcting the detection framework direction information and the detection framework location information in the three-dimensional detection framework information of the target vehicle according to the in-garage location information of the target vehicle comprises:
determining in-garage location direction information according to the in-garage location information of the target vehicle;
determining direction offset information between the in-garage location direction information and the detection framework direction information in response to determining that the in-garage location direction information is inconsistent with the detection framework direction information; and
obtaining the corrected three-dimensional detection framework information of the target vehicle by correcting the detection framework direction information and the detection framework location information in the three-dimensional detection framework information of the target vehicle according to the direction offset information.

6. The method according to claim 1, wherein obtaining (104) the corrected three-dimensional detection framework information of the target vehicle by correcting the three-dimensional detection framework information of the target vehicle according to the auxiliary detection information of the target vehicle comprises:
acquiring (309) the confidence information in the three-dimensional detection framework information of the target vehicle; and
obtaining (310) the corrected three-dimensional detection framework information of the target vehicle by lowering the confidence information in the three-dimensional detection framework information of the target vehicle in response to determining that the occlusion rate of the target vehicle is less than a preset occlusion rate threshold.

7. The method according to any one of claims 1 to 6, wherein a scene corresponding to the surrounding image of the vehicle is a parking lot scene;
in response to determining that the target vehicle is in a moving state, the auxiliary detection information of the target vehicle comprises at least one of the grounding line information and the occlusion rate; and
in response to determining that the target vehicle is in a stationary state, the auxiliary detection information of the target vehicle comprises at least one of the in-garage location information and the occlusion rate.

8. A vehicle (500), comprising:
a processor (551); and
a memory (552) storing instructions that, when executed by the processor (551), cause the processor (551) to perform a three-dimensional target detection method according to any one of claims 1 to 7.

9. A non-transitory computer-readable storage medium, storing instructions that, when executed by a processor (551), cause the processor (551) to perform a three-dimensional target detection method according to any one of claims 1 to 7.

## Patentansprüche

1. Ein Dreidimensionales-Ziel-Erfassungsverfahren, das folgende Schritte aufweist:
Erlangen (101, 301) eines Umgebungsbildes eines Fahrzeugs;
Eingeben (102, 302) des Umgebungsbildes des Fahrzeugs in ein Voreingestelltes-Ziel-Erfassungsmodell und Erlangen (102, 302) von Dreidimensionaler-Erfassungsrahmen-Informationen eines Zielfahrzeugs in dem Umgebungsbild des Fahrzeugs, die durch das Zielerfassungsmodell ausgegeben werden, wobei die Dreidimensionaler-Erfassungsrahmen-Informationen des Zielfahrzeugs zumindest eine aus einer Erfassungsrahmenstandortinformation, einer Erfassungsrahmenrichtungsinformation, einer Erfassungsrahmenkategorieinformation und einer Vertrauensinformation aufweist;
Erhalten (103, 303) von Hilfserfassungsinformationen des Zielfahrzeugs durch Durchführen zumindest einer aus einer Bodenlinienerfassung, einer Garagenstandorterfassung und einer Verdeckungsgraderfassung an dem Umgebungsbild des Fahrzeugs, wobei die Hilfserfassungsinformationen des Zielfahrzeugs zumindest eine aus einer Bodenlinieninformation des Zielfahrzeugs, einer Garagenstandortinformation des Zielfahrzeugs und einer Verdeckungsgradinformation des Zielfahrzeugs aufweist; und
Erhalten (104) korrigierter Dreidimensionaler-Erfassungsrahmen-Informationen des Zielfahrzeugs durch Korrigieren der Dreidimensionaler-Erfassungsrahmen-Informationen des Zielfahrzeugs gemäß den Hilfserfassungsinformationen des Zielfahrzeugs,
wobei bei der Garagenstandorterfassung Eckpunktinformationen eines Garagenstandorts jedes Zielfahrzeugs in dem Umgebungsbild des Fahrzeugs erhalten werden und sich die Eckpunktinformationen des Garagenstandorts auf Koordinateninformationen jeder Ecke des Garagenstandorts beziehen, an dem sich das Zielfahrzeug befindet, und
wobei bei der Verdeckungsgraderfassung ein Bodenlinienabschnitt jedes Zielfahrzeugs in dem Umgebungsbild des Fahrzeugs in Kombination mit einem Freiraumerfassungsalgorithmus bestimmt wird und für jedes Zielfahrzeug ein Verdeckungsgrad des Zielfahrzeugs in Kombination mit einer Länge des Bodenlinienabschnitts des Zielfahrzeugs und einer Gesamtlänge einer Bodenprojektionsgrenze des Zielfahrzeugs bestimmt wird.

2. Das Verfahren gemäß Anspruch 1, wobei das Erhalten (104) der korrigierten Dreidimensionaler-Erfassungsrahmen-Informationen des Zielfahrzeugs durch Korrigieren der Dreidimensionaler-Erfassungsrahmen-Informationen des Zielfahrzeugs gemäß den Hilfserfassungsinformationen des Zielfahrzeugs folgende Schritte aufweist:
Erlangen (305) der Erfassungsrahmenstandortinformationen in den Dreidimensionaler-Erfassungsrahmen-Informationen des Zielfahrzeugs; und
Erhalten (306) der korrigierten Dreidimensionaler-Erfassungsrahmen-Informationen des Zielfahrzeugs durch Korrigieren der Erfassungsrahmenstandortinformationen in den Dreidimensionaler-Erfassungsrahmen-Informationen des Zielfahrzeugs gemäß den Bodenlinieninformationen des Zielfahrzeugs.

3. Das Verfahren gemäß Anspruch 2, wobei das Erhalten (306) der korrigierten Dreidimensionaler-Erfassungsrahmen-Informationen des Zielfahrzeugs durch Korrigieren der Erfassungsrahmenstandortinformationen in den Dreidimensionaler-Erfassungsrahmen-Informationen des Zielfahrzeugs gemäß den Bodenlinieninformationen des Zielfahrzeugs folgende Schritte aufweist:
Bestimmen einer Erfassungsrahmenregion des Zielfahrzeugs gemäß den Erfassungsrahmenstandortinformationen des Zielfahrzeugs;
ansprechend auf ein Bestimmen, dass ein erster Bodenpunkt in den Bodenlinieninformationen vorhanden ist, wobei sich der erste Bodenpunkt nicht in der Erfassungsrahmenregion befindet, Bestimmen von Standortversatzinformationen der Erfassungsrahmenregion gemäß Standortinformationen des ersten Bodenpunkts; und
Erhalten der korrigierten Erfassungsrahmenstandortinformationen des Zielfahrzeugs durch Korrigieren der Erfassungsrahmenstandortinformationen in den Dreidimensionaler-Erfassungsrahmen-Informationen des Zielfahrzeugs gemäß den Standortversatzinformationen.

4. Das Verfahren gemäß Anspruch 1, wobei das Erhalten (104) der korrigierten Dreidimensionaler-Erfassungsrahmen-Informationen des Zielfahrzeugs durch Korrigieren der Dreidimensionaler-Erfassungsrahmen-Informationen des Zielfahrzeugs gemäß den Hilfserfassungsinformationen des Zielfahrzeugs folgende Schritte aufweist:
Erlangen (307) der Erfassungsrahmenrichtungsinformationen und der Erfassungsrahmenstandortinformationen in den Dreidimensionaler-Erfassungsrahmen-Informationen des Zielfahrzeugs; und
Erhalten (308) der korrigierten Dreidimensionaler-Erfassungsrahmen-Informationen des Zielfahrzeugs durch Korrigieren der Erfassungsrahmenrichtungsinformationen und der Erfassungsrahmenstandortinformationen in den Dreidimensionaler-Erfassungsrahmen-Informationen des Zielfahrzeugs gemäß den Garagenstandortinformationen des Zielfahrzeugs.

5. Das Verfahren gemäß Anspruch 4, wobei das Erhalten (308) der korrigierten Dreidimensionaler-Erfassungsrahmen-Informationen des Zielfahrzeugs durch Korrigieren der Erfassungsrahmenrichtungsinformationen und der Erfassungsrahmenstandortinformationen in den Dreidimensionaler-Erfassungsrahmen-Informationen des Zielfahrzeugs gemäß den Garagenstandortinformationen des Zielfahrzeugs folgende Schritte aufweist:
Bestimmen von Garagenstandortrichtungsinformationen gemäß den Garagenstandortinformationen des Zielfahrzeugs;
Bestimmen von Richtungsversatzinformationen zwischen den Garagenstandortrichtungsinformationen und den Erfassungsrahmenrichtungsinformationen ansprechend auf ein Bestimmen, dass die Garagenstandortrichtungsinformationen nicht mit den Erfassungsrahmenrichtungsinformationen übereinstimmen; und
Erhalten der korrigierten Dreidimensionaler-Erfassungsrahmen-Informationen des Zielfahrzeugs durch Korrigieren der Erfassungsrahmenrichtungsinformationen und der Erfassungsrahmenstandortinformationen in den Dreidimensionaler-Erfassungsrahmen-Informationen des Zielfahrzeugs gemäß den Richtungsversatzinformationen.

6. Das Verfahren gemäß Anspruch 1, wobei das Erhalten (104) der korrigierten Dreidimensionaler-Erfassungsrahmen-Informationen des Zielfahrzeugs durch Korrigieren der Dreidimensionaler-Erfassungsrahmen-Informationen des Zielfahrzeugs gemäß den Hilfserfassungsinformationen des Zielfahrzeugs folgende Schritte aufweist:
Erlangen (309) der Vertrauensinformationen in den Dreidimensionaler-Erfassungsrahmen-Informationen des Zielfahrzeugs; und
Erhalten (310) der korrigierten Dreidimensionaler-Erfassungsrahmen-Informationen des Zielfahrzeugs durch Verringern der Vertrauensinformationen in den Dreidimensionaler-Erfassungsrahmen-Informationen des Zielfahrzeugs ansprechend auf ein Bestimmen, dass der Verdeckungsgrad des Zielfahrzeugs unter einem voreingestellten Verdeckungsgradschwellenwert liegt.

7. Das Verfahren gemäß einem der Ansprüche 1 bis 6, wobei eine Szene, die dem Umgebungsbild des Fahrzeugs entspricht, eine Parkplatzszene ist;
ansprechend auf ein Bestimmen, dass sich das Zielfahrzeug in einem Bewegungszustand befindet, die Hilfserfassungsinformationen des Zielfahrzeugs zumindest eines aus den Bodenlinieninformationen und dem Verdeckungsgrad aufweist; und
ansprechend auf ein Bestimmen, dass sich das Zielfahrzeug in einem stationären Zustand befindet, die Hilfserfassungsinformationen des Zielfahrzeugs zumindest eines aus den Garagenstandortinformationen und dem Verdeckungsgrad aufweist.

8. Ein Fahrzeug (500), das folgende Merkmale aufweist:
einen Prozessor (551); und
einen Speicher (552), in dem Anweisungen gespeichert sind, die bei Ausführung durch den Prozessor (551) bewirken, dass der Prozessor (551) ein Dreidimensionales-Ziel-Erfassungsverfahren gemäß einem der Ansprüche 1 bis 7 durchführt.

9. Ein nicht flüchtiges, computerlesbares Speichermedium, in dem Anweisungen gespeichert sind, die bei Ausführung durch einen Prozessor (551) bewirken, dass der Prozessor (551) ein Dreidimensionales-Ziel-Erfassungsverfahren gemäß einem der Ansprüche 1 bis 7 durchführt.

## Revendications

1. Procédé de détection de cible tridimensionnelle, comprenant :
l'acquisition (101, 301) d'une image environnante d'un véhicule ;
la saisie (102, 302) de l'image environnante du véhicule dans un modèle de détection de cible prédéfini, et l'acquisition (102, 302) des informations de cadre de détection tridimensionnel d'un véhicule cible dans l'image environnante du véhicule générée par le modèle de détection de cible, dans lequel les informations de cadre de détection tridimensionnel du véhicule cible comprennent au moins l'une des informations de localisation de cadre de détection, des informations de direction de cadre de détection, des informations de catégorie de cadre de détection et des informations de confiance ;
l'obtention (103, 303) des informations de détection auxiliaires du véhicule cible en effectuant au moins l'une d'une détection de la ligne de contact avec le sol, d'une détection de la localisation dans un garage et d'une détection du taux d'occlusion sur l'image environnante du véhicule, dans lequel les informations de détection auxiliaires du véhicule cible comprennent au moins l'une des informations sur la ligne de contact avec le sol du véhicule cible, des informations de la localisation dans un garage du véhicule cible et d'un taux d'occlusion du véhicule cible ; et
l'obtention (104) des informations corrigées de cadre de détection tridimensionnel du véhicule cible en corrigeant les informations de cadre de détection tridimensionnel du véhicule cible selon les informations de détection auxiliaires du véhicule cible,
dans lequel dans la détection de la localisation dans un garage, des informations des points d'angle de la localisation dans un garage de chaque véhicule cible dans l'image environnante du véhicule sont obtenues, et les informations des points d'angle de la localisation dans un garage correspondent aux informations de coordonnées de chaque angle de la localisation dans un garage dans lequel se trouve le véhicule cible, et
dans lequel dans la détection du taux d'occlusion, un segment de la ligne de contact avec le sol de chaque véhicule cible dans l'image environnante du véhicule est déterminé en combinaison avec un algorithme de détection d'espace libre, et pour chaque véhicule cible, un taux d'occlusion du véhicule cible est déterminé en combinaison avec une longueur du segment de la ligne de contact avec le sol du véhicule cible et une longueur totale d'une limite de projection de contact avec le sol du véhicule cible.

2. Procédé selon la revendication 1, dans lequel l'obtention (104) des informations corrigées de cadre de détection tridimensionnel du véhicule cible par correction des informations de cadre de détection tridimensionnel du véhicule cible selon les informations de détection auxiliaires du véhicule cible, comprend :
l'acquisition (305) des informations de localisation de cadre de détection dans les informations de cadre de détection tridimensionnel du véhicule cible ; et
l'obtention (306) des informations corrigées de cadre de détection tridimensionnel du véhicule cible par correction des informations de localisation de cadre de détection dans les informations de cadre de détection tridimensionnel du véhicule cible, selon les informations de la ligne de contact avec le sol du véhicule cible.

3. Procédé selon la revendication 2, dans lequel l'obtention (306) des informations corrigées de cadre de détection tridimensionnel du véhicule cible par correction des informations de localisation de cadre de détection dans les informations de cadre de détection tridimensionnel du véhicule cible, selon les informations de la ligne de contact avec le sol du véhicule cible, comprend :
la détermination d'une région de cadre de détection du véhicule cible selon les informations de localisation de cadre de détection du véhicule cible ;
en réponse à la détermination qu'il y a un premier point de contact avec le sol dans les informations de la ligne de contact avec le sol, dans lequel le premier point de contact avec le sol n'est pas situé dans la région de cadre de détection, la détermination des informations de décalage de localisation de la région de cadre de détection selon les informations de localisation du premier point de contact avec le sol ; et
l'obtention des informations corrigées de localisation de cadre de détection du véhicule cible par correction des informations de localisation de cadre de détection dans les informations de cadre de détection tridimensionnel du véhicule cible, selon les informations de décalage de localisation.

4. Procédé selon la revendication 1, dans lequel l'obtention (104) des informations corrigées de cadre de détection tridimensionnel du véhicule cible par correction des informations de cadre de détection tridimensionnel du véhicule cible selon les informations de détection auxiliaires du véhicule cible, comprend :
l'acquisition (307) des informations de direction de cadre de détection et des informations de localisation de cadre de détection dans les informations de cadre de détection tridimensionnel du véhicule cible ; et
l'obtention (308) des informations corrigées de cadre de détection tridimensionnel du véhicule cible par correction des informations de direction de cadre de détection et des informations de localisation de cadre de détection dans les informations de cadre de détection tridimensionnel du véhicule cible, selon les informations de localisation dans un garage du véhicule cible.

5. Procédé selon la revendication 4, dans lequel l'obtention (308) des informations corrigées de cadre de détection tridimensionnel du véhicule cible par correction des informations de direction de cadre de détection et des informations de localisation de cadre de détection dans les informations de cadre de détection tridimensionnel du véhicule cible, selon les informations de localisation dans un garage du véhicule cible, comprend :
la détermination des informations de direction de localisation dans un garage selon les informations de localisation dans un garage du véhicule cible ;
la détermination des informations de décalage de direction entre les informations de direction de la localisation dans un garage et les informations de direction de cadre de détection en réponse à la détermination que les informations de direction de la localisation dans un garage sont incohérentes avec les informations de direction de cadre de détection ; et
l'obtention des informations corrigées de cadre de détection tridimensionnel du véhicule cible par correction des informations de direction de cadre de détection et des informations de localisation de cadre de détection dans les informations de cadre de détection tridimensionnel du véhicule cible, selon les informations de décalage de direction.

6. Procédé selon la revendication 1, dans lequel l'obtention (104) des informations corrigées de cadre de détection tridimensionnel du véhicule cible par correction des informations de cadre de détection tridimensionnel du véhicule cible, selon les informations de détection auxiliaires du véhicule cible, comprend :
l'acquisition (309) des informations de confiance dans les informations de cadre de détection tridimensionnel du véhicule cible ; et
l'obtention (310) des informations corrigées de cadre de détection tridimensionnel du véhicule cible en abaissant les informations de confiance dans les informations de cadre de détection tridimensionnel du véhicule cible en réponse à la détermination que le taux d'occlusion du véhicule cible est inférieur à un seuil de taux d'occlusion prédéfini.

7. Procédé selon l'une des revendications 1 à 6, dans lequel une scène correspondant à l'image environnante du véhicule est une scène d'un parking ;
en réponse à la détermination que le véhicule cible est dans un état de mouvement, les informations de détection auxiliaires du véhicule cible comprennent au moins l'une des informations de la ligne de contact avec le sol et le taux d'occlusion ; et
en réponse à la détermination que le véhicule cible est dans un état stationnaire, les informations de détection auxiliaires du véhicule cible comprennent au moins l'une des informations de la localisation dans un garage et le taux d'occlusion.

8. Véhicule (500), comprenant :
un processeur (551) ; et
une mémoire (552) stockant des instructions qui, lorsqu'elles sont exécutées par le processeur (551), amènent le processeur (551) à exécuter un procédé de détection de cible tridimensionnelle selon l'une des revendications 1 à 7.

9. Support de stockage non transitoire lisible par ordinateur, stockant des instructions qui, lorsqu'elles sont exécutées par un processeur (551), amènent le processeur (551) à exécuter un procédé de détection de cible tridimensionnelle selon l'une des revendications 1 à 7.
